# EUROPEAN PATENT APPLICATION

(11) **EP 4 646 935 A1**
(43) Date of publication of application: **12.11.2025**
(21) Application number: 25174862.0
(22) Date of filing: 07.05.2025
(51) Int. Cl.: A22C 29/02

(54) **SYSTEM AND METHOD FOR PROCESSING FOOD PRODUCTS FOR SEPARATE PROCESSING OF DIFFERENT PARTS**

(30) Priority: 08.05.2024 GB 202406429
(71) Applicant: Polar Systems Limited, King's Lynn, Norfolk PE30 4LA (GB)
(72) Inventor: GAMBLE, Ashley, King's Lynn, PE30 4LA (GB)
(74) Representative: ip21 Ltd

(57) **Abstract**

The system for processing seafood includes processing equipment, multiple lanes, sensors, cameras, a computing device, a processing algorithm, a lighting system, an air blast system, and bins. The processing equipment identifies the end of a 'meat' section of a seafood tail and cuts the product at this point. The lanes, incorporated in the processing equipment, convey the product to an evaluation zone. The sensors and cameras, located at the evaluation zone, detect the product. The computing device processes images from the cameras. The processing algorithm determines various sections of the seafood and instructs the cut at an optimum point. The lighting system illuminates the seafood to help identify the cut point. The air blast system separates the heads and tails of the seafood. The bins receive the separated heads and tails for further processing.

## Description

### TECHNICAL FIELD

The invention pertains to a system and method for processing food products in particular langoustines or the like, specifically separating the tails from the body for further processing. Similar products may include for example shrimp and lobster where a body portion has little or no meat compared to the tail portion.

### BACKGROUND

The seafood industry, particularly the processing of langoustines, is a labor-intensive and time-consuming process. Traditionally, the separation of the body and tail of langoustines is done manually, which requires skilled labor and significant time. This manual process also leads to inconsistencies in the cut, affecting the quality of the final product. Moreover, the processing time is critical when the operation is carried out at sea, between hauls. Therefore, there is a need for an efficient and reliable system that can automate the process of separating the body and tail of langoustines, ensuring consistent quality and reducing the processing time.

WO2010040810A1 is considered the closest prior art. However, whilst it describes shrimps on a conveyor being photographed by camera, the image is analysed by analysing the shell structure (shape and configuration) to work out where the transition between the head and tail is and a robot will then position itself so as to sever along that line using a separation device. This presents practical issues due to the changing nature of the shell structure. The present invention overcomes the drawbacks of this prior proposal and provides a much more reliable and repeatable process which lends itself to scaling up for high throughput processing.

### SUMMARY

In accordance with embodiments, a system is provided for processing seafood. The system comprises processing equipment configured to identify the end of a 'meat' section of a seafood tail and to cut the product at this point. In preferred embodiments, the system also includes a plurality of lanes incorporated in the processing equipment for receiving and conveying the product to an evaluation zone, and a series of sensors and cameras located at the evaluation zone for detecting the product. A computing device for processing images obtained from the cameras and a processing algorithm implemented in the computing device for determining various sections of the seafood and for instructing the cut at an optimum point of each individual seafood are also part of the system. The system optionally includes a lighting system located under a conveyor belt for illuminating the seafood to help identify the cut point, an air blast system for separating the heads and tails of the seafood, and a plurality of bins or receptacles for receiving the separated heads and tails for further processing.

In a first broad independent aspect, the invention provides a system for processing seafood, the system comprising one or more lanes for receiving and conveying the product to an evaluation zone, a camera located at the evaluation zone for detecting the product, and a computing device for processing images obtained from the cameras, the system further comprising a cutting machine for cutting the product and a computing device with a processing algorithm implemented in the computing device for determining various sections of the seafood and for instructing a cut of the product at an optimum point of the product; whereby a seafood meaty tail portion is separated from a body section.

This configuration is particularly advantageous as it allows the efficient identification and separation of the meaty tail portion and the body portion.

In a subsidiary aspect, the system comprises one or more lanes for receiving and conveying the product to an evaluation zone, a camera located at the evaluation zone for detecting the product, and a computing device for processing images obtained from the cameras, the system further comprising a cutting machine for cutting the product and a computing device with a processing algorithm implemented in the computing device for determining various sections of the seafood and for instructing a cut of the product at an optimum point of the product; whereby a seafood meaty tail portion is separated from a body section; characterised in that the system comprises a lighting system for illuminating the seafood to determine contrasting dark and light regions of the product as detected by the camera; wherein the cut point is substantially located at the junction between the dark and light regions of the seafood as identified in the captured images.

In a subsidiary aspect, the processing equipment is configured to identify the end of a meat section of a seafood tail and to cut the product at this point. This configuration is particularly advantageous to maximise the accuracy of the separation of the meaty tail portion and the body portion.

In a further subsidiary aspect, the system further comprises a conveyor belt and a lighting system located under a conveyor belt for illuminating the seafood to help identify the cut point. This configuration is particularly advantageous for the accuracy and repeatability of the cutting operation.

In a further subsidiary aspect, the system further comprises an air blast system for separating the heads and tails of the seafood. This configuration is particularly advantageous for efficient separation of the severed parts.

In a further subsidiary aspect, the system further comprises a plurality of bins or receptacles for receiving the separated heads and tails for further processing.

In a further subsidiary aspect, the processing equipment comprises a plurality of individually controllable belts in order to displace the products differentially in each lane. This is particularly advantageous in allowing the processing to be tailored to the variations in individual langoustine shapes and orientations. In one embodiment, the or each lane may be formed of a succession of at least two belts separated by a point at which the produce is cut. In one embodiment, the processing equipment may incorporate 8 lanes, each lane comprising a succession of at least two belts.

In a further subsidiary aspect, the system further comprises one or more sensors which are configured to identify the presence of the moving product on the conveyor belt. This configuration is particularly advantageous for efficient processing.

In a further subsidiary aspect, the cameras are configured to capture images of the product on the belt. This configuration is particularly advantageous in assessing the product.

In a further subsidiary aspect, the processing algorithm is configured to determine the orientation of the seafood. This configuration allows the process to be accurate despite wide variations in the orientation of the langoustines as presented prior to cutting.

In a further subsidiary aspect, the cut point is located at the junction between a dark region and a light region of the seafood identified in the captured images. This configuration is particularly advantageous in determining with accuracy the cut point or cut line.

In a further subsidiary aspect, the lighting system is provided underneath the conveying belt and the conveying belt is sufficiently transparent to allow the light to pass therethrough.

In a further subsidiary aspect, the air blast system is configured to direct the heads and the tails separately to two different destinations.

In a further subsidiary aspect, the processing algorithm is configured to determine the shape and configuration of the seafood.

In a further subsidiary aspect, the cameras are calibrated using a range of samples prior to use.

In a further broad independent aspect, the method of processing seafood comprising the steps of conveying the product in one or more lanes to an evaluation zone, capturing images of the production at the evaluation zone, and processing images to determine various sections of the seafood and instructing a cut of the product at an optimum point of the product; whereby a seafood meaty tail portion is separated from a body section.

In a further broad independent aspect, the method of processing seafood comprises the steps of conveying the product in one or more lanes to an evaluation zone, capturing images of the production at the evaluation zone, and processing images to determine various sections of the seafood and instructing a cut of the product at an optimum point of the product; whereby a seafood meaty tail portion is separated from a body section; characterised in that the method comprises the further step of illuminating the seafood to determine contrasting dark and light regions of the product in images captured by a camera; and cutting said seafood substantially at the junction between the identified dark and light regions of the seafood.

In a further subsidiary aspect, the images are processed to identify the end of a meat section of a seafood tail and the product is cut in accordance with this point.

In a further subsidiary aspect, the method comprises the further step of providing a conveyor belt and a lighting system located under the conveyor belt for illuminating the seafood to help identify the cut point.

In a further subsidiary aspect, the method further comprises an air blast system; and the step of applying an air blast to separate the heads and tails of the seafood.

In a further subsidiary aspect, the method comprises the further steps of providing a plurality of individually controllable belts and displacing the products differentially in each lane.

In a further subsidiary aspect, the method further comprises the step of sensing to identify the presence of the moving product on the conveyor belt.

In a further subsidiary aspect, the method further comprises the step of capturing images of the product on the belt.

In a further subsidiary aspect, the method further comprises the step of determining the orientation of the seafood.

In a further subsidiary aspect, the method further comprises the step of determining the cut point at the junction between a dark region and a light region of the seafood identified in captured images.

In a further subsidiary aspect, the method further comprises the step of providing a lighting system underneath the conveying belt, the conveying belt being sufficiently transparent to allow the light to pass therethrough.

In a further subsidiary aspect, the method further comprises the step of applying an air blast to the product to direct the heads and the tails separately to two different destinations.

### BRIEF DESCRIPTION OF THE FIGURES

FIG. 1 shows a perspective view of a langoustine preparation station.

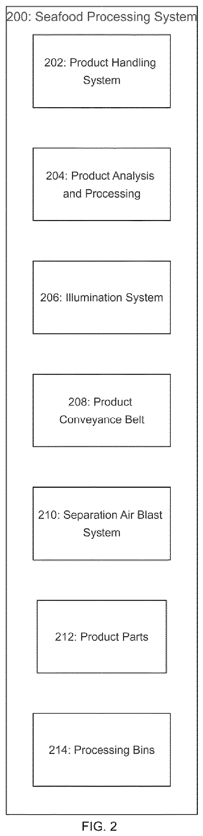

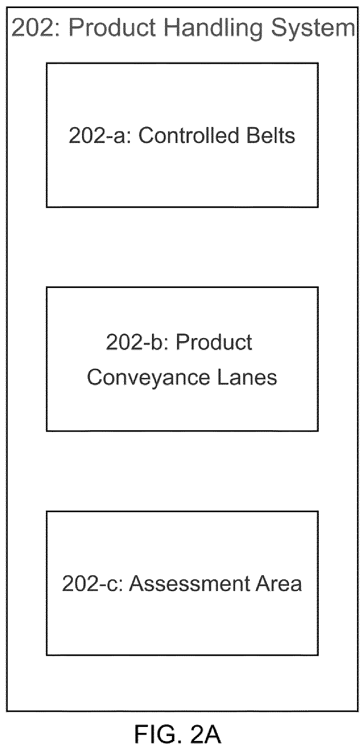

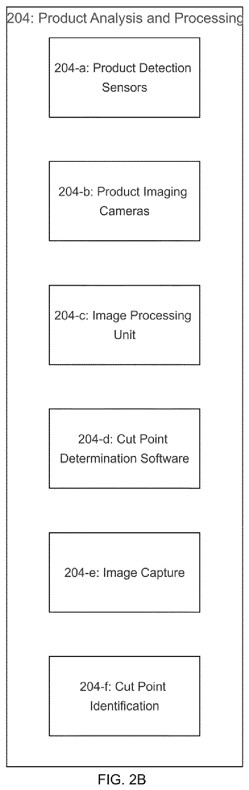

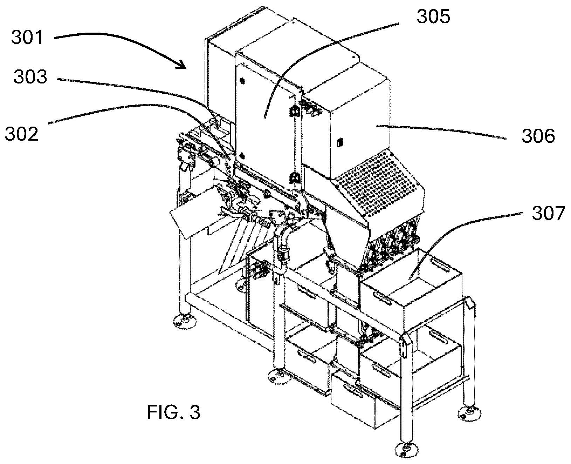

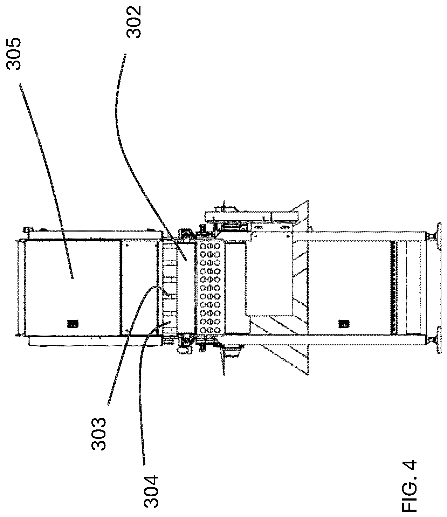

FIG. 2 illustrates, in a block diagram, the components of a seafood processing system in accordance with certain embodiments.
FIG. 2A FIG. 2A illustrates, in a block diagram, the 'Product Handling System' and its sub-components in accordance with certain embodiments.
FIG. 2B FIG. 2B illustrates, in a block diagram, the 'Product Analysis and Processing' system and its sub-components in accordance with certain embodiments.

### DETAILED DESCRIPTION

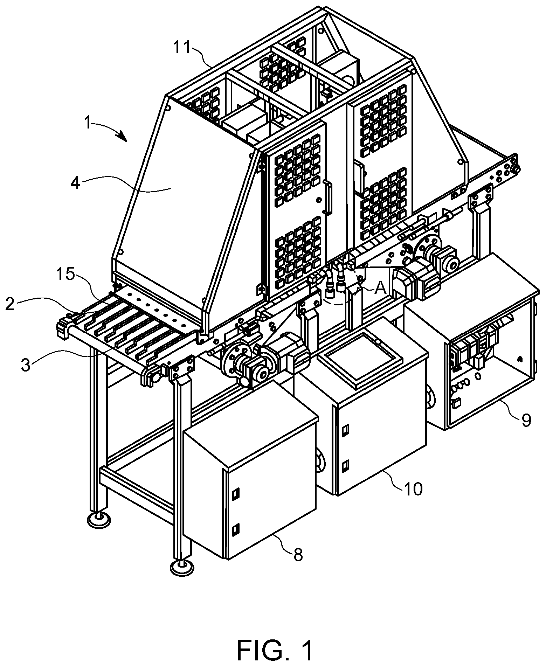

Figure 1 shows a processing station 1 with a conveyor system generally referenced 2. The conveyor system incorporates a plurality of lanes such as lane 3 for guiding the products to an enclosure 4. The lanes may be formed in U or V shaped sections which may be of a metal for ease of cleaning. The U or V shaped sections may displace the product by oscillation or vibration of the lanes either collectively or individually. This configuration is particularly beneficial since it allows the product such as langoustines to be oriented lengthwise whilst being displaced towards a conveyor belt in the inspection zone. The enclosure provides in effect a photobooth in which one or an array of cameras are provided for imaging the products as they enter or as they are displaced along with the assistance of a conveyor belt. A camera may be provided for each lane or alternatively a single camera may assess a plurality of lanes at the same time. The imaging process will be described in detail with respect to subsequent figures. The system may incorporate a sensor for detecting the presence of a product such as a langoustine as it enters the photobooth. A first camera may be provided to capture images which may be analysed to determine the orientation of the langoustine. Furthermore a camera may be provided to capture images showing the relative colour or the contrast between dark and light sections. In particular, the meaty tail of a langoustine lets much more light through it than the body portion which is relatively opaque. The image is then processed to determine the point or the line at which the langoustine is to be severed in two at the subsequent cutting station. The cutter may be directed to specifically act at that point to severe the langoustine. A further camera may be employed to distinguish between the tail and the body portion of the langoustine and thereafter an air blast may be activated to direct the tail portion in a first direction and the body portion in another direction, whereby the portions are separated for further processing.

The Seafood Processing System 200 is designed to automate the separation of the meaty tail sections from the body in seafood processing, particularly for langoustines. The system includes the Product Handling System 202, which features Controlled Belts 202-a for managing the movement of seafood and Product Conveyance Lanes 202-b that guide the seafood to the Assessment Area 202-c. The Product Analysis and Processing component 204 is equipped with Product Detection Sensors 204-a and Product Imaging Cameras 204-b for identifying seafood on the conveyor. An Image Processing Unit 204-c analyses the captured images, and Cut Point Determination Software 204-d determines the precise location for cutting. The conveyor belt may be translucent so that it allows light to go through it from the light sources which may be provided under the conveyor belt. Thus, the conveyor belt accentuates the contrast between dark and light portions of the langoustine in the images which are captured by the camera or cameras for further assessment in order to determine the optimal location for the cut to take place which may be generally at the junction between the light and dark areas of the langoustines.

The Controlled Belts 202-a within the Product Handling System 202 are adjustable to handle different sizes and shapes of seafood, aligning each piece for processing. The Product Conveyance Lanes 202-b transport the seafood to the Assessment Area 202-c, where it undergoes evaluation. When seafood is detected on the conveyor by the Product Detection Sensors 204-a, the Product Imaging Cameras 204-b capture images. These images are processed by the Image Processing Unit 204-c, which uses algorithms to analyze the visual data. A bank of predetermined images of langoustine may be provided in order to allow a comparison of the captured images against the images from the bank of previously captured images. This allows the process to be progressively fine-tuned in order to appropriately assess and grade the langoustines for quality control and for information purposes. The Cut Point Determination Software 204-d uses this analysis to identify the cut point, distinguishing between the meaty tail section and the body based on colour differentiation.

The Illumination System 206 provides backlighting to enhance the contrast between the dark body and light tail regions, aiding the cameras in identifying the cut point. After determining the cut point, the system performs the separation, and the Separation Air Blast System 210 directs the separated heads and tails into Processing Bins 214 for further processing. This process minimizes the need for manual intervention and maintains the quality of the seafood product.

The Product Analysis and Processing component 204 plays a role in the seafood processing system, focusing on the separation of seafood parts. This component includes Product Detection Sensors 204-a, Product Imaging Cameras 204-b, Image Processing Unit 204-c, Cut Point Determination Software 204-d, Image Capture 204-e, and Cut Point Identification 204-f. These sub-components function together to detect, analyze, and process seafood, determining the optimal cutting points for separation.

The operation of component 204 commences with the detection of seafood by the Product Detection Sensors 204-a as it travels along the conveyor belt. These sensors trigger the image capture process when the seafood is within the camera's field of view. Following detection, the Product Imaging Cameras 204-b capture images of the seafood. The images are taken under specific lighting conditions to enhance the contrast between the seafood's regions.

The images are then sent to the Image Processing Unit 204-c, where they are analyzed to ascertain the orientation and configuration of each seafood item. This analysis is important for the accurate identification of the cut point. The Cut Point Determination Software 204-d uses the analysed data to locate the optimal cut point, usually at the junction between the tail section and the darker gut region, to ensure the integrity of the meat is maintained after separation.

The Cut Point Identification 204-f identifies the cut point on the seafood, which informs the cutting mechanism where to separate the tail from the body. The system is calibrated with a variety of seafood samples to accommodate different sizes and shapes, ensuring consistent cutting accuracy.

The Illumination System 206 plays a role in the seafood processing system by enhancing visibility of the seafood's structure to facilitate precise cutting. This system is designed to cast light through the conveyor belt, accentuating the contrast between the seafood's meaty and non-meaty sections, which is critical for the accurate identification of the cut point.

The Illumination System 206 is integral to the segmentation of seafood by providing light from beneath the conveyor belt. This placement of lighting differentiates between the denser body and the more translucent tail of seafood, such as langoustines. The light effectively penetrates the tail due to its lower density, creating a visual contrast that is captured by the overhead cameras. This contrast is pronounced at the junction where the meaty section ends, which is the target for the cutting mechanism.

As seafood moves along the conveyor belt, the Illumination System 206 activates to provide consistent lighting conditions. This ensures that the Product Imaging Cameras 204-b can generate high-contrast images, which are then processed by the Image Processing Unit 204-c. The Cut Point Determination Software 204-d within this unit analyzes the images to locate the precise cut point by identifying the transition from the dark region (the body) to the light region (the tail). Once the cut point is determined, the system instructs the cutting mechanism to execute the separation at the optimal location, ensuring efficient harvesting of the meat section. The cutting operation may be carried out by the use of a blade or guillotine which descends on the langoustine to sever the tail from the body.

The effectiveness of the Illumination System 206 is enhanced by the calibration of the Product Imaging Cameras 204-b, which are adjusted using a range of samples to accurately interpret the images under varying conditions. This calibration allows the system to adapt to different sizes and orientations of seafood, maintaining processing accuracy.

The Product Conveyance Belt 208 is a part of the seafood processing system, enabling the movement and positioning of seafood for processing. This belt 208 facilitates the transport of langoustines to the assessment area for cutting.

The Product Conveyance Belt 208 operates in conjunction with a lighting system 206 positioned underneath it. This placement of lighting enhances the translucency of the seafood, aiding in the identification of the cut point by creating a contrast between the dark gut region and the lighter meat section.

As langoustines are conveyed along the belt, they pass through the field of view of cameras 204-b. These cameras are calibrated with a range of samples to accurately capture images of the seafood, which are then relayed to a computing device 204-c. The device processes these images using an algorithm 204-d that determines the shape, configuration, length and orientation of each langoustine. A camera is preferably provided for each one of the lanes for conveying the product. The system may also be configured to optionally only cut the langoustine or other such product if the length is above a predetermined threshold thus certain langoustine may pass through the system and be directed to further processing appropriate to langoustines which are below the threshold. This may, for example, allow the system to return certain langoustines to sea without the cutting operation having taken place. Furthermore, the algorithm may be configured to cope with different longitudinal orientations of the langoustines thus being able to be adaptable whether the head is first or the tail is first in the assessment process, thus allowing the cut to be efficiently carried out and the product being appropriately directed to the head channel, the tail channel or even the further processing output channel options.

Once the langoustines are cut at the junction between the dark and light regions, an air blast system (210) is activated. This system separates the heads and tails of the seafood, directing them into designated bins or receptacles (214) for further processing. The process is orchestrated to ensure efficient handling and processing of the seafood.

The Separation Air Blast System (210) is a component in the seafood processing system that segregates the heads and tails of seafood after they have been cut. This system facilitates the subsequent stages of processing by directing the separated parts into designated bins.

The system includes a series of air jets that are activated once the cut seafood parts are detected on the conveyor belt. The Product Imaging Cameras 204-b capture images of the seafood, and the Cut Point Determination Software 204-d identifies the optimal point for cutting. After the seafood is divided, the air jets target the separated sections and propel them into different Processing Bins 214 for further handling.

The timing and intensity of the air blasts are controlled to ensure accurate separation without damaging the product. The system is designed to accommodate variations in size and weight of the seafood parts, ensuring a consistent separation process. This component streamlines the processing line by reducing manual labour and minimizing the time between processing stages, which is beneficial in environments such as fishing vessels at sea.

After the cut, the separated parts are propelled by the air blast system into the Processing Bins (214), where they are collected for further processing. These bins are designed to handle the throughput of separated seafood parts, ensuring a seamless transition to the next phase of processing, whether that be packaging, freezing, or additional refinement. The entire process is orchestrated to maintain efficiency and product integrity from the moment the seafood enters the system to the final collection in the bins.

Figure 5 shows a processing station 301 with a conveyor system generally referenced 302 and an external conveyor 303. The external conveyor system incorporates a plurality of lanes such as lane 304 for guiding the products to an enclosure 305. The lanes may be formed in U or V shaped sections which may be of a metal for ease of cleaning. The U or V shaped sections may displace the product by oscillation or vibration of the lanes either collectively or individually. This configuration is particularly beneficial since it allows the product such as langoustines to be oriented lengthwise whilst being displaced towards a conveyor belt 302 in the inspection zone of the enclosure. The enclosure provides in effect a photobooth in which one or an array of cameras are provided for imaging the products as they enter or as they are displaced along with the assistance of a conveyor belt. The enclosure 305 has an access door providing access to the enclosed space for maintenance purposes. The enclosure facilitates optimal and reliable lighting conditions as the light is sufficient to shine through the langoustines in order to allow the cameras to identify and be able to distinguish the tail from the rest of the body.

A camera may be provided for each lane or alternatively a single camera may assess a plurality of lanes at the same time. The imaging process has been described in detail with respect to preceding figures. The system may incorporate a sensor for detecting the presence of a product such as a langoustine as it enters the photobooth. A first camera may be provided to capture images which may be analysed to determine the orientation of the langoustine. Furthermore a camera may be provided to capture images showing the relative colour or the contrast between dark and light sections. In particular, the meaty tail of a langoustine lets much more light through it than the body portion which is relatively opaque. The image is then processed to determine the point or the line at which the langoustine is to be severed in two at the subsequent cutting station. The cutter may be directed to specifically act at that point to severe the langoustine. The cutter may incorporate a cutter housing in which an array of cutters may be provide which may take the form a guillotine so severing the heads from the tails along the determine lines to improve process efficiency and reduce wastage. A further camera may be employed to distinguish between the tail and the body portion of the langoustine and thereafter an air blast may be activated to direct the tail portion in a first direction and the body portion in another direction, whereby the portions are separated for further processing. An number of compartments may be provided to receive respectively the body portions and the tail portions such as compartment 307. The tailing station 301 may also be equipped with a frame for holding a plurality of such compartments.

## Claims

1. A system for processing seafood, the system comprising one or more lanes for receiving and conveying the product to an evaluation zone, a camera located at the evaluation zone for detecting the product, and a computing device for processing images obtained from the cameras, the system further comprising a cutting machine for cutting the product and a computing device with a processing algorithm implemented in the computing device for determining various sections of the seafood and for instructing a cut of the product at an optimum point of the product; whereby a seafood meaty tail portion is separated from a body section; **characterised in that** the system comprises a lighting system for illuminating the seafood to determine contrasting dark and light regions of the product as detected by the camera; wherein the cut point is substantially located at the junction between the dark and light regions of the seafood as identified in the captured images.

2. The system according to claim 1, wherein the system comprises a conveyor belt and the lighting system is located under the conveyor belt for illuminating the seafood to help identify the cut point.

3. The system according to either of the preceding claims, further comprising an air blast system for separating the heads and tails of the seafood.

4. The system according to any one of the preceding claims, wherein the processing equipment comprises a plurality of individually controllable belts in order to displace the products differentially in each lane.

5. The system according to any one of the preceding claims, wherein the products are placed in elongate U or V shaped channels which vibrate to orient the product in a longitudinal direction.

6. The system according to any one of the preceding claims, further comprising one or more sensors which are configured to identify the presence of the moving product on the conveyor belt.

7. The system according to any one of the preceding claims, wherein the camera is configured to capture images of the product on the belt; and wherein the processing algorithm is configured to determine one or more of the following: the orientation of the seafood, the shape of the seafood, the configuration of the seafood, and/or the length of the seafood.

8. The system according to any one of the preceding claims, wherein the cameras are calibrated using a range of samples prior to use.

9. A method of processing seafood comprising the steps of conveying the product in one or more lanes to an evaluation zone, capturing images of the production at the evaluation zone, and processing images to determine various sections of the seafood and instructing a cut of the product at an optimum point of the product; whereby a seafood meaty tail portion is separated from a body section; **characterised in that** the method comprises the further step of illuminating the seafood to determine contrasting dark and light regions of the product in images captured by a camera; and cutting said seafood substantially at the junction between the identified dark and light regions of the seafood.

10. The method of claim 9, further providing a conveyor belt and a lighting system located under the conveyor belt for illuminating the seafood to help identify the cut point.

11. The method of either claim 9 or claim 10, further comprising an air blast system; and applying an air blast to separate the heads and tails of the seafood.

12. The method of any one of claims 9 to 11, comprising the further steps of providing a plurality of individually controllable belts and displacing the products differentially in each lane.

13. The method of any one of claims 9 to 12, comprising the step of conveying products by placing them in elongate U or V shaped channels which vibrate to orient the product in a longitudinal direction.

14. The method of any one of claims 9 to 13, further comprising the step of sensing to identify the presence of the moving product on the conveyor belt.

15. The method according to any one of claims 9 to 14, further comprising one or more of the following steps: determining the orientation of the seafood, the shape of the seafood, the configuration of the seafood, and/or the length of the seafood.
